# EUROPÄISCHE PATENTSCHRIFT

(11) **EP 1 806 074 B1**
(45) Veröffentlichungstag und Bekanntmachung des Hinweises auf die Patenterteilung: **03.03.2010**
(21) Anmeldenummer: 07000154.0
(22) Anmeldetag: 05.01.2007
(51) Int. Cl.: A47C 27/06, A47C 23/00, A47C 23/04

(54) **Federelementanordnung**
Spring assembly
Ensemble de ressort

(30) Priorität: 07.01.2006 DE 102006001051; 21.02.2006 DE 202006002748 U
(43) Veröffentlichungstag der Anmeldung: 11.07.2007
(73) Patentinhaber: Spiroplex GmbH, 33415 Verl (DE)
(72) Erfinder: Bock, Klaus, 33415 Verl (DE)
(74) Vertreter: Stenger, Watzke & Ring

(56) Entgegenhaltungen:
- WO-A-2005/048781
- DE-A1- 2 015 659
- DE-A1- 19 828 648
- DE-U1- 29 721 655
- DE-U1-202004 010 143

## Beschreibung

Die Erfindung betrifft eine Federelementanordnung zur Hinterfederung von insbesondere Matratzen, Polsterelementen oder dergleichen, mit einer Mehrzahl von benachbart angeordneten Federelementen, die jeweils einen Federkörper mit wendelförmig ausgebildeten Federarmen und einen daran einstückig angeordneten Auflagerabschnitt aufweisen, wobei die Auflagerabschnitte zweier benachbarter Federelemente mittels eines einen vorgebbaren Abstand zwischen den Auflagerabschnitten definierenden Koppelelements miteinander verbunden sind, wobei das Koppelelement einen ersten sowie einen zweiten Abschnitt aufweist, wobei der erste Abschnitt des Koppelelements am Auflagerabschnitt eines ersten Federelements und der zweite Abschnitt des Koppelelements am Auflagerabschnitt eines zweiten, zum ersten Federelement benachbarten Federelements angeordndet sind.

Federelemente aus Kunststoff, welche beispielsweise der federnden Abstützung einer Matratze, eines Polsters oder dergleichen dienen, sind aus dem Stand der Technik bekannt, so zum Beispiel aus der DE 20 2004 010 143.2.

Das aus der DE 20 2004 010 143.2 vorbekannte Federelement ist als einstückiges Spritzgußteil ausgebildet und verfügt in .seiner bevorzugten Ausgestaltungsform über zwei als Federarme ausgebildete, wendelförmige Streifenelemente. Die Streifenelemente erstrecken sich in Höhenrichtung des Federelements zwischen einem Basisabschnitt einerseits sowie einem Kopfabschnitt andererseits, wobei Basisabschnitt, Kopfabschnitt und Federarme jeweils aus Kunststoff bestehen und als Spritzgußteile ausgebildet sind.

Mit der DE 20 2004 010 143.2 wird des weiteren ein Federmodul vorgeschlagen, welches in Fig. 6 der DE 20 2004 010 143.2 gezeigt ist. Dieses Federmodul ist zweistückig ausgebildet und besteht aus zwei Federelementen der vorbeschriebenen Art, die entweder kopfabschnittseitig oder basisabschnittseitig miteinander verbunden sind. Zur Verbindung zweier Federelemente zu einem gemeinsamen Federmodul dienen nach der Ausgestaltung der DE 20 2004 010 143.2 entsprechend ausgebildete Verbindungsmittel, die entweder kopfabschnittseitig oder basisabschnittseitig an den Federelementen angeordnet sind.

Obgleich sich das Federmodul nach der DE 20 2004 010 143.2 im alltäglichen Praxiseinsatz bewährt hat, besteht Verbesserungsbedarf, insbesondere mit Blick auf eine vereinfachte und damit kostengünstigere Herstellung.

Eine mehrere Federelemente aufweisende Federelementanordnung ist aus dem Stand der Technik bekannt, so zum Beispiel aus der DE 297 21 655 U1.

Die mit der DE 297 21 655 U1 beschriebene Federelementanordnung verfügt über ein Gittertragwerk aus einzelnen Gitterkreuzen, wobei ein jedes Gitterkreuz ein Federelement trägt. Das Federelement besteht seinerseits aus einer Basisplatte und einem Auflageteller, wobei zwischen Basisplatte und Auflageteller wenigstens zwei nach außen gerichtete Auflagerarme angeordnet sind, die als Blattfeder mit in Richtung der wirkenden Auflagekraft gerichtetem Federweg ausgebildet sind. Die Basisplatte eines jeden Federelements verfügt über ein Verbindungsmittel, beispielsweise in Form einer Bohrung, welches zur Anordnung des Federelements an einem Gitterkreuz des Gittertragwerkes dient.

Die vorbeschriebene und aus der DE 297 21 655 U1 bekannte Federelementanordnung ist nicht frei von Nachteilen. Obgleich nämlich die Basisplatten der Federelemente mittels des Gittertragwerkes in ihrer relativen Lage zueinander positioniert werden können, ergeben sich bezüglich der Auflageteller unerwünschte Freiheitsgrade. So können sich die Auflageteller der einzelnen Federelemente unabhängig voneinander bewegen, so daß es bei einer entsprechenden Kraftbeaufschlagung zu einer ungleichmäßigen Auslenkung einzelner Auflageteller kommen kann, was im schlimmsten Fall die Gefahr in sich birgt, daß einzelne Auflageteller miteinander verhaken. Darüber hinaus kann es insbesondere bei einer punktuellen Kraftbeaufschlagung zu einer Überlastung einzelner Federelemente kommen, was in nachteiliger Weise den Funktionsausfall dieser Federelemente zur Folge haben kann.

Eine gattungsgemäße Federelementanordnung ist aus der DE 20 15 659 bekannt. Diese Druckschrift offenbart eine sogenannte Federeinlage für beispielsweise Matratzen, die über Federelemente aus Kunststoff verfügt, die untereinander verbunden sind. Die Federelemente sind im Abstand zueinander angeordnet und mittels Brücken miteinander verbunden. Als Brücken kommen Verbindungsstücke in Betracht, aber auch eine sämtliche Federelemente miteinander verbindende Platte. Die Federelemente bestehen aus einem isotopenbestrahlten Kunststoff.

Es ist daher die **Aufgabe** der Erfindung, eine Federelementanordnung mit Federelementen im Sinne eines Federmoduls nach der DE 20 2004 010 143.2 vorzuschlagen, die bei gleichzeitiger Verbesserung der Federungseigenschaften einfach und damit kostengünstiger herstellbar ist.

Zur **Lösung** der vorstehenden Aufgabe wird mit der Erfindung eine Federelementanordnung vorgeschlagen, die sich dadurch auszeichnet, dass die beiden Abschnitte des Koppelelements jeweils Verbindungsmittel tragen, und die so ausgestaltete Verbindung von Koppelelement einerseits und Auflagerabschnitt andererseits lösbar ist.

Die erfindungsgemäße Federelementanordnung besteht aus einer Mehrzahl von benachbart angeordneten Federelementen. Dabei sind die Auflagerabschnitte benachbarter Federelemente miteinander zwangsgekoppelt, so daß sich diese nicht unabhängig voneinander bewegen können. Im Unterschied zu der aus dem Stand der Technik vorbekannten Federelementanordnung ist es bei der erfindungsgemäßen Federelementanordnung also nicht möglich, daß die Auflagerabschnitte der Federelemente unabhängig voneinander ausgelenkt werden können, und zwar auch dann nicht, wenn eine punktuelle Kraftbeaufschlagung auf nur eines der Federelemente der Federelementanordnung einwirkt.

Die Auflagerabschnitte zweier benachbarter Federelemente sind mittels eines Koppelelements miteinander verbunden. Dieses Koppelelement definiert einen festen, das heißt nicht variablen Abstand zwischen den über das Koppelelement miteinander verbundenen Auflagerabschnitten. In Richtung des Koppelelements bleibt der Abstand zwischen zwei benachbarten Auflagerabschnitten also stets der gleiche, und zwar auch unter Krafteinwirkung.

Die vorbeschriebene Ausgestaltungsform ist aus mehreren Gründen von Vorteil. Aufgrund der Verbindung benachbarter Auflagerabschnitte kann es im Unterschied zum Stand der Technik nicht dazu kommen, daß sich einzelne Auflagerabschnitte auslenken, das heißt unabhängig von den benachbarten Auflagerabschnitten bewegen. Damit ist der Gefahr, daß sich benachbarte Auflagerabschnitte miteinander verhaken, wirkungsvoll vorgebeugt. Darüber hinaus kann es auch bei einer punktuellen Kraftbeaufschlagung nicht zur Überlastung eines Federelementes kommen, da ein Teil der auf ein Federelement einwirkenden Kraftbeaufschlagung mittels der Koppelelemente auf die zu diesem Federelement benachbart angeordneten Federelemente übertragen wird. Eine nur punktuell wirkende Kraftbeaufschlagung wird also verteilt von mehreren Federelementen aufgenommen. Dem Funktionsausfall durch Überlastung eines Federelements kann so wirksam vorgebeugt werden.

Die Federelemente selbst bestehen aus einem Federkörper mit wendelförmig ausgebildeten Federarmen. Diese Federarme tragen entweder einendseitig oder beidseitig die daran einstückig angeordneten Auflagerabschnitte. Die wendelförmige Ausgestaltung der als Streifenelemente ausgebildeten Federarme hat dabei den Vorteil, daß die Federelemente quasi auf "Null" zusammengedrückt werden können, woraus sich ein mit Bezug auf die Höhenerstreckung eines Federelements außerordentlich langer Federweg ergibt.

Das Koppelelement weist einen ersten sowie einen zweiten Abschnitt auf, wobei der erste Abschnitt des Koppelelements am Auflagerabschnitt eines ersten Federelements und der zweite Abschnitt des Koppelelements am Auflagerabschnitt eines zweiten, zum ersten Federelement benachbarten Federelements angeordnet sind. Das Koppelelement ist hierbei vorzugsweise als Verbindungssteg ausgebildet, wobei die beiden Abschnitte des Koppelelements jeweils Verbindungsmittel tragen. Im montierten Zustand greifen die Verbindungsmittel des Koppelelements in korrespondierend hierzu ausgebildete und an den jeweiligen Auflagerabschnitten benachbarter Federelemente vorgesehene Ausnehmungen ein. Diese Ausnehmungen können beispielsweise als Bohrungen ausgestaltet sein. Denkbar ist in diesem Zusammenhang auch, daß die jeweiligen Auflagerabschnitte der Federelemente ösenartige Fortsätze tragen, die die Bohrungen zur Aufnahme der an den Koppelelementen angeordneten Verbindungsmittel bereitstellen.

Für eine endfertige Montage der Federelementanordnung werden zunächst die einzelnen Federelemente benachbart zueinander positioniert. Alsdann werden die Auflagerabschnitte benachbarter Federelemente mittels des Koppelelements miteinander verbunden, wobei das am ersten Abschnitt des Koppelelements angeordnete Verbindungsmittel in eine Bohrung am Auflagerabschnitt des ersten Federelements und das am zweiten Abschnitt des Koppelelements angeordnete Verbindungsmittel in eine Bohrung am Auflagerabschnitt des zweiten Federeelements eingebracht, vorzugsweise eingeklipst wird. Zur Vermeidung einer ungewollten Verbindungstrennung verfügen die an den beiden Abschnitten des Koppelelements angeordneten Verbindungsmittel über Rasteinrichtungen, beispielsweise in Form federelastischer Rückhaltezungen.

Zum Zwecke eines unterschiedlichen Abstandes kann zwischen mehreren einander nebengeordneten Federelementen vorgesehen sein, Koppelelemente unterschiedlicher Länge einzusetzen.

Die Federelementanordnung kann aus Federelementen bestehen, die jeweils einendseitig entsprechend miteinander gekoppelte Auflagerabschnitte aufweisen. Die Federelemente sind dann ihrerseits mit ihren dem jeweiligen Auflagerabschnitt gegenüberliegenden Endbereich an einer Tragkonstruktion, beispielsweise einer Platte, einer Latte, einer Gitterkonstruktion oder dergleichen anzuordnen.

Es kann aber auch vorgesehen sein, daß die Federelementanordnung aus Federelementen gebildet ist, die jeweils beidseitig über entsprechende mit Koppelelementen versehene Auflagerabschnitte verfügen. Bei dieser alternativen Ausgestaltungsform der Erfindung entsteht durch die beidseitige Ausbildung von Auflagerabschnitten eine in sich selbsttragende Konstruktion. Eine zusätzliche Abstützung der einzelnen Federelemente auf einer Tragkonstruktion ist in diesem Fall nicht erforderlich.

Die erfindungsgemäße Federelementanordnung eignet sich nicht nur zur Hinterfederung von Matratzen, Polsterelementen oder dergleichen. Vielmehr kann vorgesehen sein, die Federelementanordnung auch als Federeinlage für eine Matratze zu verwenden. In der einfachsten Ausgestaltungsform kann auf Basis der erfindungsgemäßen Federelementanordnung eine Matratze geschaffen werden, bei der die Federelementanordnung allseitig von einem elastischen Material, beispielsweise Schaumstoff, umgeben und in eine Schutzhülle, beispielsweise aus einem Gewebematerial, eingeführt ist. Auf diese Weise ergibt sich eine robuste, höchsten Komfortanforderungen genügende und im Bedarfsfall leicht zu reinigende Matratzenkonstruktion.

Im Unterschied zum Federmodul nach der DE 20 2004 010 143.2 sind die Federelemente der Federelementanordnung nicht zweistückig, sondern vielmehr einstückig ausgebildet. Ein Federelement wird als einstückiges Spritzgußteil aus Kunststoff hergestellt, was im Unterschied zu dem aus der DE 20 2004 010 143.2 vorbekannten Federmodul eine vereinfachte und damit kostengünstigere Herstellung ermöglicht. Insbesondere ist es im Unterschied zur DE 20 2004 010 143.2 nicht erforderlich, zwecks endfertiger Herstellung einen Montageschritt vorzusehen, wie dies bei dem aus der DE 20 2004 010 143.2 vorbekannten und aus zwei einzelnen Federelementen bestehenden Federmodul der Fall ist.

Ein weiterer Vorteil des Federelements sind die verbesserten Federungseigenschaften. Das Federmodul nach der DE 20 2004 010 143.2 besteht aus zwei miteinander verbundenen, einzelnen Federelementen, die entweder basisabschnittseitig oder kopfabschnittseitig miteinander verkoppelt sind, zu welchem Zweck beispielsweise ein Bajonettverschluß dienen kann. Diese Verkopplung zweier Federelemente wirkt sich nachteilig auf die Federungseigenschaften des Federmoduls nach der DE 20 2004 010 143.2 aus, da durch diese Kopplung ein starrer und die Federungseigenschaften des Federmoduls nach der DE 20 2004 010 143.2 behindernder Verbindungsabschnitt entsteht. Einen solchen Verbindungsabschnitt weist das Federelement dank seiner einstückigen Ausgestaltung nicht auf. Die durch die Streifenelemente nach dem Federelement bereitgestellten Federwirkungen können so umfangreich genutzt werden und sind nicht, wie bei dem Federmodul nach der DE 20 2004 010 143.2 durch einen die Federungseigenschaften störenden Verbindungsabschnitt beeinträchtigt.

Dank der einstückigen Ausgestaltung des Federelements, das heißt aufgrund des Fehlens eines Verbindungsabschnittes, wie er bei dem Federmodul nach der DE 20 2004 010 143.2 zwingend von Nöten ist, kann das Federelement quasi auf "Null" zusammengedrückt werden. Damit stellt das Federelement mit Bezug auf seine Erstreckung in Höhenrichtung einen vergleichsweise großen Federweg zur Verfügung, der den vom Federmodul nach der DE 20 2004 010 143.2 bereitgestellten Federweg bei weitem übertrifft. Bei gleich großem Federweg kann das Federelement mithin in Höhenrichtung sehr viel kleiner ausgebildet werden als das aus der DE 20 2004 010 143.2 vorbekannte Federmodul. Damit kann das Federelement in vorteilhafter Weise auch für andere Zwecke verwendet werden als mit der DE 20 2004 010 143.2 beschrieben, so zum Beispiel insbesondere zur Ausbildung besonders flacher Matratzen, Polsterelementen oder dergleichen. Auch die Hinterpolsterung von Matratzen, Polsterelementen oder dergleichen in vorzugsweise flacher Ausführung ist mit dem Federelement möglich. Das Federelement kann damit einem gegenüber dem Stand der Technik erweiterten Anwendungsspektrum zugeführt werden.

Gemäß einem weiteren Merkmal ist die Federwirkung der Streifenelemente durch geeignete Geometrie- und/oder Materialwahl vorgebbar.

Geometriewahl im Sinne der Erfindung bedeutet, daß die Geometrie der Streifenelemente an die bei einem bestimmungsgemäßen Einsatz des Federelements zu erwartende Kraftbeaufschlagung entsprechend angepaßt ist, so daß sie der wunschgemäß zu erzielenden Federwirkung gerecht wird. In diesem Sinne können Quer- und Längserstreckung, Querschnittsform und dergleichen der Streifenelemente vorgegeben werden, ebenso wie die geometrische Ausgestaltung des durch die wendelförmig ausgebildeten Streifenelemente gebildeten Federkörpers. Dabei liegt die Besonderheit der Erfindung darin, daß die beispielhaft voraufgeführten Geometrien je nach Anwendungsfall bedarfsgerecht ausgebildet werden können, wobei die Herstellung unabhängig von der gewählten Geometrie kostengünstig ist, da das gesamte Federelement aus Kunststoff bestehend als Spritzgußteil ausgebildet ist. Die vorgebbare Geometrie der Streifenelemente schafft in vorteilhafter Weise breite Anwendungsmöglichkeiten, womit das erfindungsgemäße Federelement in vorteilhafter Weise vielseitig einsetzbar ist.

Unter Materialwahl im Sinne der Erfindung ist zu verstehen, daß zur Ausbildung der Streifenelemente ein solcher Kunststoff eingesetzt wird, der hinsichtlich seiner Materialeigenschaften an die im Anwendungsfall auftretenden Kraftbeaufschlagungen entsprechend angepaßt ist. So ist das zu verwendende Kunststoffmaterial derart auszuwählen, daß einerseits eine hinreichende Materialfestigkeit und andererseits die gewünschte Federsteifigkeit erreicht wird. Zudem sollte das gewählte Material korrosionsbeständig und unempfindlich gegenüber Pflege- und Reinigungsmitteln sein. Als Kunststoffe in diesem Sinne haben sich insbesondere thermoplastische Kunststoffe als vorteilhaft herausgestellt.

Gemäß einem weiteren Merkmal weisen die Streifenelemente einen von der Kreisform abweichenden Querschnitt auf. Denkbar sind beispielsweise rechteckfömige Querschnitte, die insbesondere mit Blick auf eine Biegebeanspruchung vorteilhaft sind. Auch ist es denkbar, einseitig offene Querschnitte, wie zum Beispiel U-förmige Querschnitte auszubilden, die sich durch eine hohe Biegesteifigkeit und eine geringe Torsionssteifigkeit auszeichnen. Auch können aus Gewichtsgründen Hohlquerschnittprofile vorgesehen sein.

Nach einer besonderen Ausgestaltungsform ist es bevorzugt, wenn die Querschnitte der Streifenelemente rechteckförmig ausgebildet sind, wobei der Querschnitt der Streifenelemente einseitig ballig ausgebildet ist. Die ballige Ausgestaltung hat sich nicht nur aus produktionstechnischen Gründen als vorteilhaft herausgestellt, auch kann durch diese Ausgestaltung die gewünschte Federsteifigkeit der Streifenelemente zielgerichtet eingestellt werden.

Gemäß einem ergänzenden Merkmal weisen die Streifenelemente einen sich in Längsrichtung der Streifenelemente ändernden Querschnitt auf. So können die Streifenelemente beispielsweise in Längsrichtung eine abnehmende Querschnittsfläche aufweisen, so daß die Streifenelemente in Längsrichtung verjüngt ausgebildet sind. Auch können Querschnittsformen vorgesehen sein, die eine Verjüngung der Streifenelemente lediglich im mittleren Bereich vorsehen.

Gemäß einem weiteren Merkmal sind das erste und das zweite Ringteil des Federelements jeweils mehreckig, vorzugsweise sechs- oder fünfeckig ausgebildet. Diese Ausgestaltung ermöglicht bei einer benachbarten Anordnung mehrerer erfindungsgemäßer Federelemente eine wabenförmige Struktur. Insbesondere bei der Verwendung der Federelemente als Hinterfederung für eine Matratze, ein Polsterelement oder dergleichen, erweist sich eine solche wabenförmige Struktur als vorteilhaft, weil eine kompakte Anordnung der Federelemente möglich ist, was mit Bezug auf die federnd abzustützende Matratze, das federnd abzustützende Polsterelement oder dergleichen eine optimiert verteilte Krafteinleitung in die einzelnen Federelemente bewirkt.

Bei der Hinterfederung einer Matratze, eines Polsterelements oder dergleichen werden eine Vielzahl von benachbart angeordneten Federelementen nach der Erfindung eingesetzt. Diese bilden zusammen eine federnde Auflage für die Matratze, das Polsterelement oder dergleichen. Unter "Materialwahl" im Sinne der Erfindung ist mit Bezug auf eine solche Ausgestaltungsform ferner zu verstehen, daß die einzelnen zur Hinterfederung eingesetzten Federelemente aus unterschiedlichen Materialien bestehen können, um so dem Umstand Rechnung zu tragen, daß verschiedene Zonen oder Bereiche einer Matratze zum Wohlbefinden des die Matratze nutzenden Bedieners unterschiedlich abzufedem sind. So kann beispielsweise vorgesehen sein, daß die im Kopf- oder Fußbereich einer Matratze zur Hinterfederung vorzusehenden Federelemente eine geringere Federsteifigkeit aufweisen als diejenigen Federelemente, die im Becken- oder Beinbereich der Matratze zur Hinterfederung derselben vorgesehen sind. Höchsten Komfortansprüchen kann so in vorteilhafter Weise gerecht werden.

Gemäß einem weiteren Merkmal ist vorgesehen, daß die Wendelung eines Streifenelements einen sich in Erstreckungsrichtung des Streifenelements zwischen den beiden Ringteilen ändernden Wendelradius aufweist.

Dabei ist im Sinne der Erfindung unter "Wendelradius" der Radius zu verstehen, der sich als Projektion der Wendelung des Streifenelements auf eine Projektionsfläche ergibt.

Gemäß einer bevorzugten Ausgestaltungsform ist vorgesehen, daß der Wendelradius der Wendelung eines Streifenelements ausgehend von einem Ringteil in Richtung auf das andere Ringteil bis zur hälftigen Erstreckung des Streifenelements in Erstreckungsrichtung zwischen den beiden Ringteilen abnehmend und in Richtung auf das andere Ringteil ab der hälftigen Erstreckung des Streifenelements in Erstreckungsrichtung zwischen den beiden Ringteilen zunehmend ausgebildet ist. Aufgrund dieser Ausgestaltung ergibt sich ein Federelement, das nach Art einer Sanduhr doppelkegelförmig ausgebildet ist, wobei sich der kleinste Wendelradius beider Streifenelemente in etwa mittig zwischen den beiden die Streifenelemente einfassenden Ringteilen befindet.

Die in vorbeschriebener Art wendelförmig ausgebildeten Streifenelemente bieten den Vorteil, daß das Federelement einen mit Bezug auf seine Höhenerstreckung verhältnismäßig langen Federweg zur Verfügung stellt. Das erfindungsgemäße Federelement kann quasi auf "Null" zusammengedrückt werden.

Weitere Merkmale und Vorteile der Erfindung ergeben sich aus der nachfolgenden Beschreibung anhand der Fign. Dabei zeigen:
- Fig. 1: in einer perspektivischen Ansicht ein Federelement;
- Fig. 2: in einer Draufsicht von oben das Federelement nach Fig. 1;
- Fig. 3: in einer Seitenansicht das Federelement nach Fig. 1;
- Fig. 4: in einer teilgeschnittenen Seitenansicht das Federelement entlang der Schnittlinie IV-IV nach Fig. 3;
- Fig. 5: in perspektivischer Darstellung ein Federelement gemäß der Erfindung;
- Fig. 6: in einer Draufsicht von oben das Federelement nach Fig. 5;
- Fig. 7: in Seitenansicht das Federelement nach Fig. 6;
- Fig. 8: in geschnittener Seitenansicht das Federelement nach Fig. 7 gemäß Schnittlinie VIII-VIII;
- Fig. 9: in perspektivischer Darstellung ein Koppelelement gemäß der Erfindung;
- Fig. 10: in einer Seitenansicht das Koppelelement nach Fig. 9;
- Fig. 11: in Draufsicht von unten das Koppelelement nach Fig. 10;
- Fig. 12: in geschnittener Seitenansicht das Koppelelement nach Fig. 11 gemäß Schnittlinie XII-XII;
- Fig. 13: in perspektivischer Darstellung eine Federelementanordnung gemäß der Erfindung;
- Fig. 14: in Draufsicht von oben die Federelementanordnung nach Fig. 13 und
- Fig.15: ausschnittsweise in geschnittener Seitenansicht die Federelementanordnung nach Fig. 14 gemäß Schnittlinie XV-XV.

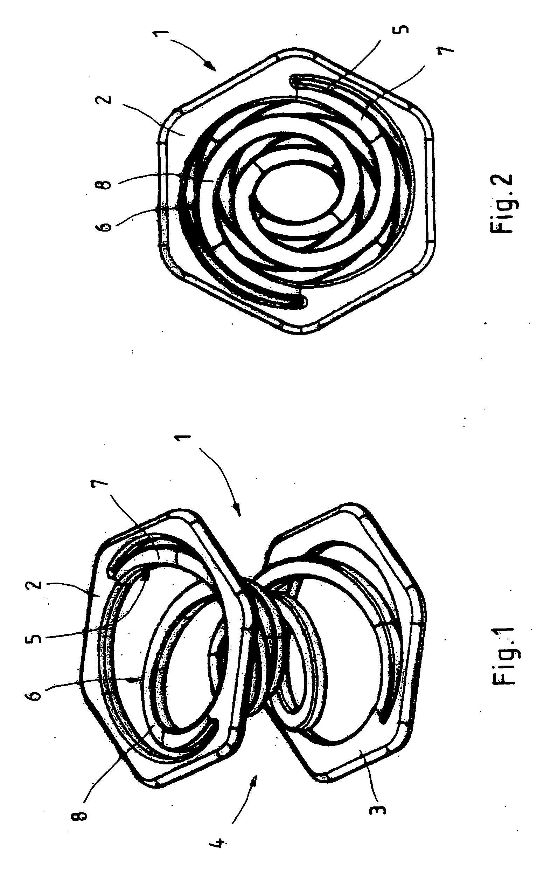

Die Fign. 1 bis 4 zeigen jeweils in unterschiedlichen Ansichten ein Federelement 1, das lediglich beispielhaft erläutert wird.

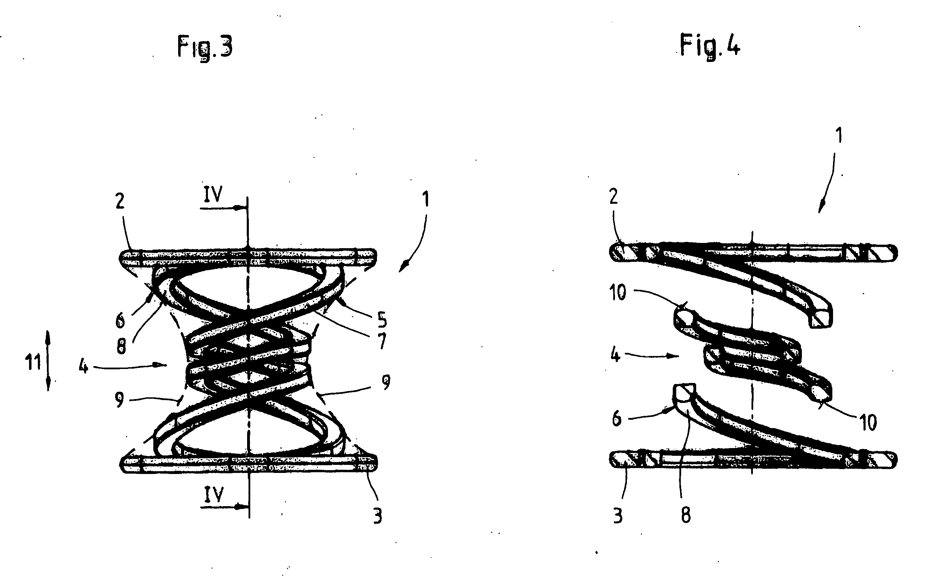

Das Federelement 1 besteht aus Kunststoff und ist als einstückiges Spritzgußteil ausgebildet. Wie aus der Seitenansicht nach Fig. 3 am besten zu erkennen ist, bildet das Federelement einen Volumenkörper, der doppelkegelig nach Art einer Sanduhr ausgebildet ist. Der Bereich des mit Bezug auf eine Projektionsfläche projizierten, kleinsten Durchmessers ist in Erstreckungsrichtung 11 in etwa mittig zwischen dem ersten Ringteil 2 und dem zweiten Ringteil 3 ausgebildet.

Das Federelement verfügt über einen Federkörper 4, der zwischen einem ersten Ringteil 2 und einem zweiten Ringteil 3 angeordnet ist. Der Federkörper 4 besteht nach dem Ausführungsbeispiel der Fign. 1 bis 4 aus zwei Federarmen 5 und 6, die jeweils als wendelförmige Streifenelemente 7 bzw. 8 ausgebildet sind. Es versteht sich von selbst, daß, es durchaus möglich ist, einen Federkörper 4 mit mehr als nur zwei Federarmen vorzusehen. So können beispielsweise auch drei, vier oder mehr Federarme vorgesehen sein.

Wie insbesondere aus den Fign. 3 und 4 zu erkennen ist, ist das Federelement 1 derart ausgebildet, daß der Wendelradius der Wendelung eines Streifenelements 7 bzw. 8 ausgehend von einem Ringteil 2 bzw. 3 in Richtung auf das andere Ringteil 2 bzw. 3 bis zur hälftigen Erstreckung des Streifenelements 7 bzw. 8 in Erstreckungsrichtung 11 zwischen den beiden Ringteilen 2 bzw. 3 abnehmend und in Richtung auf das andere Ringteil 2 bzw. 3 ab der hälftigen Erstreckung des Streifenelements 7 bzw. 8 in Erstreckungsrichtung 11 zwischen den beiden Ringteilen 2 bzw. 3 zunehmend ausgebildet ist. Durch diese Ausgestaltung entsteht die doppelkegelförmige und nach Art einer Sanduhr ausgebildete Kontur, wie sie in Fig. 3 mittels der Strichlinie 9 deutlich gemacht ist.

Der Querschnitt eines Streifenelements 7 bzw. 8 ist im wesentlichen rechteckförmig ausgebildet, wie insbesondere Fig. 4 erkennen läßt. Dabei ist die Querschnittsfläche des Streifenelements 7 bzw. 8 einseitig ballig ausgeführt, wobei vorgesehen ist, daß diejenige Seite 10 des Streifenelements 7 bzw. 8 ballig ausgebildet ist, die dem nächstliegenden Ringteil 2 bzw. 3 am nächsten kommt.

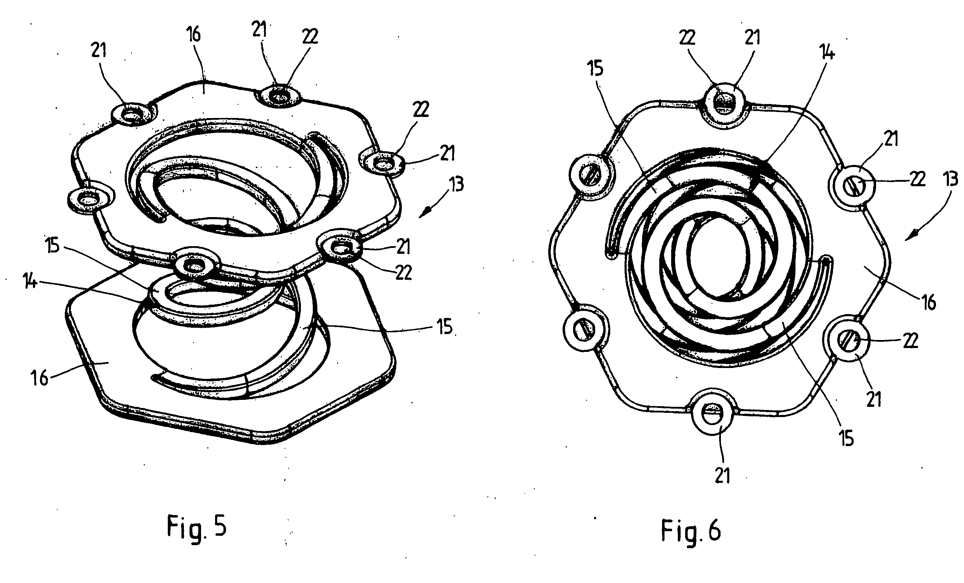

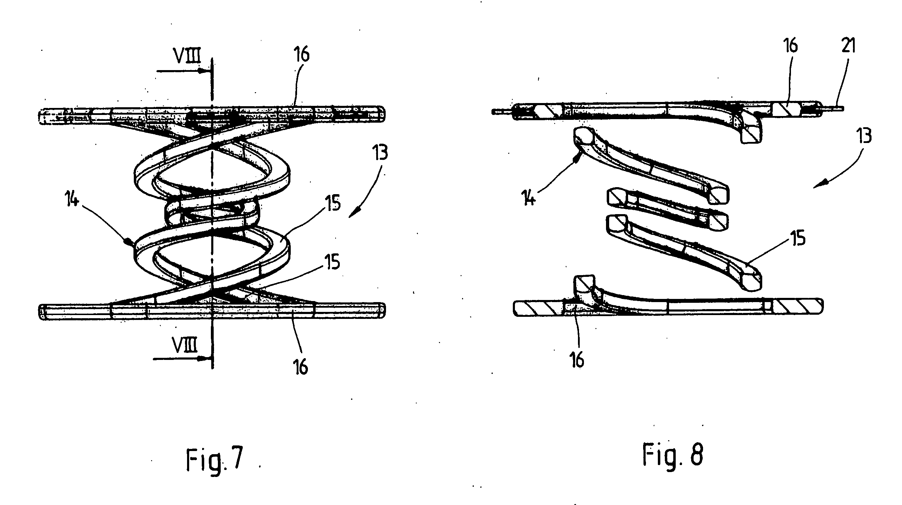

Die Fign. 5 bis 8 zeigen jeweils ein Federelement 13 nach der Erfindung. Das Federelement 13 ist aus einem Federkörper 14 mit wendelförmig ausgebildeten Federarmen 15 gebildet. Wie insbesondere aus der Seitenansicht nach Fig. 7 zu erkennen ist, trägt der Federkörper 14 mit Bezug auf die Blattebene nach Fig. 7 sowohl oberseitig als auch unterseitig jeweils einen Auflagerabschnitt 16. Die beiden Auflagerabschnitte 16 sind jeweils einstückig mit dem Federkörper 14 ausgebildet. Dies läßt insbesondere die Darstellung nach Fig. 6 erkennen.

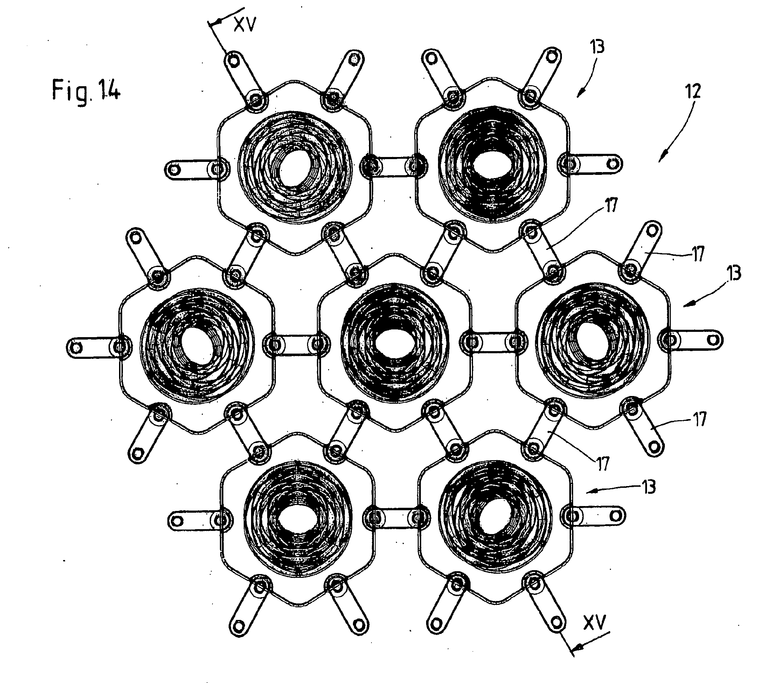

Der mit Bezug auf die Zeichnungsebene nach Fig. 14 obere Auflagerabschnitt trägt umfangsseitig eine Mehrzahl von ösenartigen Fortsätzen 21, die jeweils eine Bohrung 22 bereitstellen. Besonders deutlich ist dieser Sachverhalt insbesondere Fig. 5 zu entnehmen.

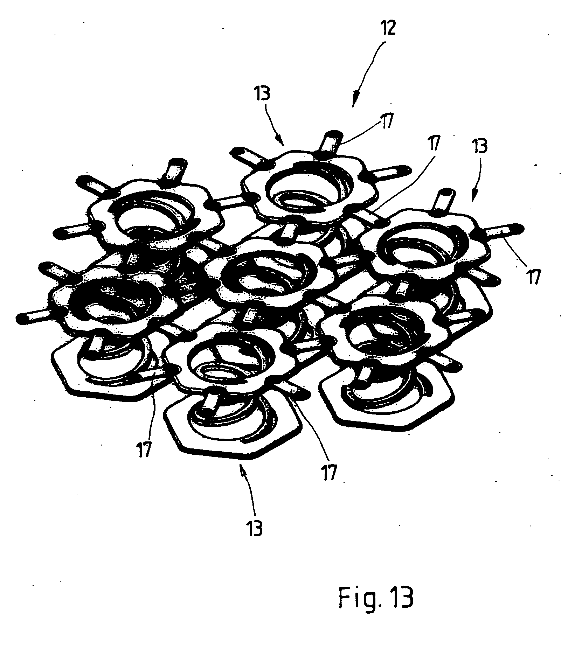

Mehrere Federelemente 13 bilden eine erfindungsgemäße Federelementanordnung 12, wie diese in den Fign. 13, 14 und 15 in unterschiedlichen Ansichten gezeigt ist. Wie insbesondere die Fign. 13 und 14 erkennen lassen, besteht die Federelementanordnung 12 aus einer Mehrzahl von benachbart angeordneten Federelementen 13.

Die Federelementanordnung 12 dient insbesondere der Hinterfederung von Matratzen, Polsterelementen oder dergleichen, wobei die matratzenseitigen Auflagerabschnitte 16 der zur Federelementanordnung 12 gehörenden Federelemente 13 eine Auflagerwiderfläche für die von der Federelementanordnung 12 zu tragende Matratze bilden.

Die Auflagerabschnitte 16 zweier benachbarter Federelemente 13 sind mittels eines einen vorgebbaren Abstand zwischen den Auflagerabschnitten 16 definierenden Koppelelements 17 miteinander verbunden. Diesen Sachzusammenhang zeigen insbesondere die Fign. 13 und 14.

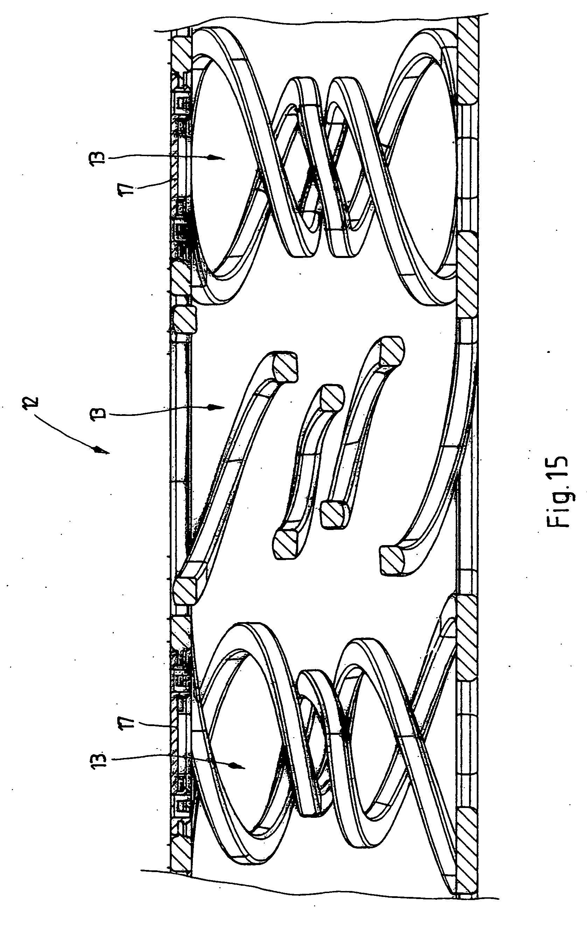

Gemäß dem Ausführungsbeispiel nach den Fign. 13, 14 und 15 sind nur die mit Bezug auf die Zeichnungsebene nach Fig. 15 oberen Auflagerabschnitte 16 benachbarter Federelemente 13 über entsprechende Koppelelemente 17 miteinander verbunden. Die mit Bezug auf die Zeichnungsebene nach Fig. 15 unteren Auflagerabschnitte 16 der Federelemente 13 sind nicht zwangsgekoppelt. Es versteht sich jedoch von selbst, daß auch diese mittels entsprechender Koppelelemente miteinander verbunden sein können.

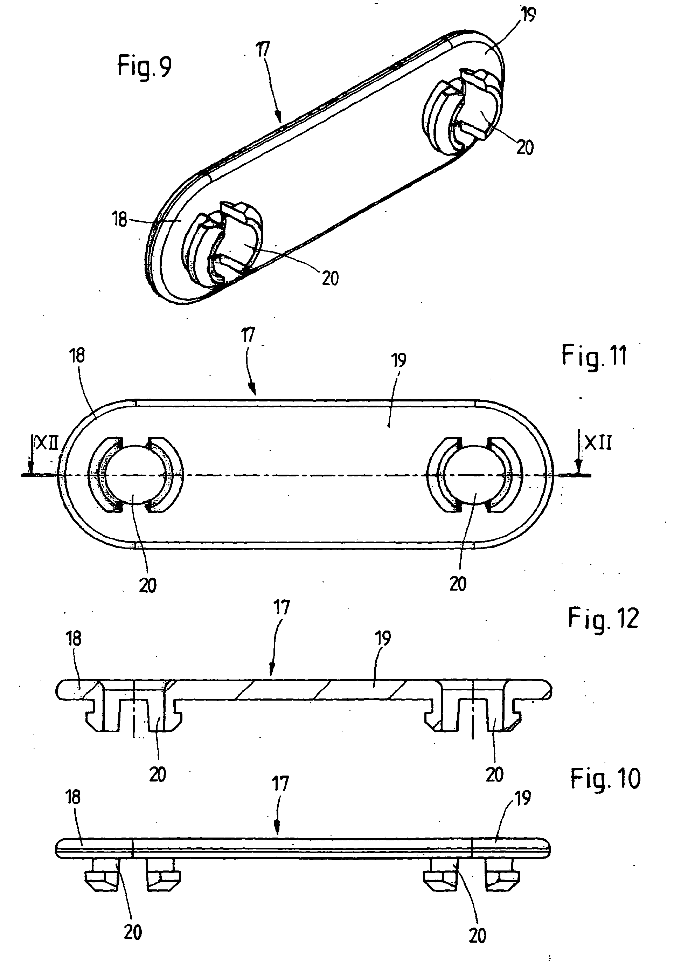

Das zur Verbindung zweier benachbarter Federelemente 13 dienende Koppelelement 17 ist in den Fign. 9 bis 12 in verschiedenen Ansichten gezeigt. Zu erkennen ist hier, daß das Koppelelement 17 nach Art eines Verbindungssteges ausgebildet ist und über einen ersten Abschnitt 18 sowie über einen zweiten Abschnitt 19 verfügt. Sowohl der erste Abschnitt 18 als auch der zweite Abschnitt 19 tragen jeweils ein Verbindungselement 20. Dieses Verbindungselement 20 ist federelastisch ausgebildet und trägt einendseitig Rastzungen.

Für die Verbindung von Auflagerabschnitten 16 zweier benachbarter Federelemente 13 ist der erste Abschnitt 18 des Koppelelements 17 am ersten Federelement 13 und der zweite Abschnitt 19 des Koppelelements 17 am zweiten Federelement 13 anzuordnen. Hierzu dienen die an den Federelementen 13 auflagerabschnittseitig angeordneten Fortsätze 21, die auch als Ösen bezeichnet werden können. Die von diesen Fortsätzen 21 jeweils bereitgestellten Bohrungen 22 sind korrespondierend zu den am Koppelelement 17 angeordneten Verbindungselementen 20 ausgebildet. Diese können durch einfaches Einklipsen in den von den Fortsätzen 21 bereitgestellten Bohrungen 22 eingerastet werden. Dank der federelastischen Ausbildung der Verbindungselemente 20 ist die so ausgestaltete Verbindung von Koppelelement 17 einerseits und Auflagerabschnitt 16 andererseits lösbar.

### Bezugszeichenliste

- 1: Federelement
- 2: Ringteil
- 3: Ringteil
- 4: Federkörper
- 5: Federarm
- 6: Federarm
- 7: Streifenelement
- 8: Streifenelement
- 9: Strichlinie
- 10: Seite
- 11: Erstreckungsrichtung
- 12: Federelementanordnung
- 13: Federelement
- 14: Federkörper
- 15: Federarm
- 16: Auflagerabschnitt
- 17: Koppelelement
- 18: erster Abschnitt
- 19: zweiter Abschnitt
- 20: Verbindungselement
- 21: Fortsatz
- 22: Bohrung

## Patentansprüche

1. Federelementanordnung zur Hinterfederung von insbesondere Matratzen, Polsterelementen oder dergleichen, mit einer Mehrzahl von benachbart angeordneten Federlementen (13), die jeweils einen Federkörper (14) mit wendelförmig ausgebildeten Federarmen (15) und einen daran einstückig angeordneten Auflagerabschnitt (16) aufweisen, wobei die Auflagerabschnitte (16) zweier benachbarter Federelemente (13) mittels eines einen vorgebbaren Abstand zwischen den Auflagerabschnitten (16) definierenden Koppelelements (17) miteinander verbunden sind, wobei das Koppelelement (17) einen ersten sowie einen zweiten Abschnitt (18, 19) aufweist, wobei der erste Abschnitt (18) des Koppelelements (17) am Auflagerabschnitt (16) eines ersten Federelements (13) und der zweite Abschnitt (19) des Koppelelements (17) am Auflagerabschnitt (16) eines zweiten, zum ersten Federelement (13) benachbarten Federelements (13) angeordnet sind,
**dadurch gekennzeichnet,**
**dass** die beiden Abschnitte (18, 19) des Koppelelements (17) jeweils Verbindungsmittel (20) tragen, und die so ausgestaltete Verbindung von Koppelelement (17) einerseits und Auflagerabschnitt (16) andererseits lösbar ist.

2. Federelementanordnung nach Anspruch 1, **dadurch gekennzeichnet, daß** die Verbindungsmittel (20) des Koppelelements (17) im endmontierten Zustand in Ausnehmungen (22) der Auflagerabschnitte (16) eingreifen.

3. Federelementanordnung nach Anspruch 2, **dadurch gekennzeichnet, daß** die Ausnehmungen (22) von auflagerabschnittseitig angeordneten Fortsätzen (21) bereitgestellt wird.

4. Federelementanordnung nach Anspruch 1, 2 oder 3, **dadurch gekennzeichnet, daß** die Verbindungsmittel (20) federelastisch ausgebildet sind.

5. Federelementanordnung nach einem der Ansprüche 1 bis 4, **dadurch gekennzeichnet, daß** die Verbindungsmittel (20) einendseitig Rastzungen tragen.

6. Federelementanordnung nach einem der vorhergehenden Ansprüche 1 bis 5, **dadurch gekennzeichnet, daß** das Koppelelement (17) als Verbindungssteg ausgebildet ist.

7. Federelementanordnung nach einem der vorhergehenden Ansprüche, **dadurch gekennzeichnet, daß** das Federelement (13) aus Kunststoff besteht und als einstückiges Spritzgußteil nach Art einer Sanduhr ausgebildet ist.

## Claims

1. A spring assembly for the springing of, in particular, mattresses, bolster elements or the like with a plurality of spring elements (13) arranged adjacent to one another, which each have a spring body with helical spring arms (15) and a support section (16) integrally arranged thereon, wherein the support sections (16) of two adjacent spring elements (13) are connected together by means of a coupling element (17) defining a predeterminable spacing between the support sections (16), wherein the coupling element (17) has a first and a second section (18, 19), wherein the first section (18) of the coupling element (17) is arranged on the support section (16) of a first spring element (13) and the second section (19) of the coupling element (17) is arranged on the support section (16) of a second spring element (13) adjacent to the first spring element (13), **characterised in that** the two sections (18,19) of the coupling element (17) carry respective connecting means (20) and the connection thus constructed of the coupling element (17) on the one hand and the support section (16) on the other hand is releasable.

2. A spring assembly as claimed in Claim 1, **characterised in that** the connecting means (20) of the coupling element (17) engage, in the final mounted state, in openings (22) in the support sections (16).

3. A spring assembly as claimed in Claim 2, **characterised in that** the openings (22) are provided by extensions (21) arranged on the support section side.

4. A spring assembly as claimed in Claim 1, 2 or 3, **characterised in that** the connecting means (20) are of resilient construction.

5. A spring assembly as claimed in Claims 1 to 4, **characterised in that** the connecting means (20) have locking tongues at one end.

6. A spring assembly as claimed in one of the preceding Claims 1 to 5, **characterised in that** the coupling element (17) is constructed in the form of a connecting web.

7. A spring assembly as claimed in one of the preceding Claims, **characterised in that** the spring element (13) consists of plastic material and is constructed in the form of a one-piece injection moulded component in the manner of an hourglass.

## Revendications

1. Disposition d'éléments de ressort pour l'amortissement en particulier de matelas, d'éléments de rembourrage ou similaires, avec une pluralité d'éléments de ressort (13) disposés à proximité les uns des autres, qui possèdent chacun un corps de ressort (14) avec des bras de ressort (15) disposés en spirale et une section d'appui (16) disposée d'un seul tenant sur ceux-ci, les sections d'appui (16) de deux éléments de ressort (13) voisins étant reliées entre elles au moyen d'un élément de couplage (17) définissant une distance qui peut être prédéterminée entre les sections d'appui (16), lequel élément de couplage (17) présente une première section et une deuxième (18, 19), la première section (18) de l'élément de couplage (17) étant disposée sur la section d'appui (16) d'un premier élément de ressort (13) et la deuxième section (19) de l'élément de couplage (17) sur la section d'appui (16) d'un deuxième élément de ressort (13) voisin du premier élément de ressort (13),
**caractérisée en ce que** les deux sections (18, 19) de l'élément de couplage (17) portent chacune des moyens de liaison (20) et la liaison ainsi réalisée entre l'élément de couplage (17), d'une part, et la section d'appui (16) d'autre part peut être défaite.

2. Disposition d'éléments de ressort selon la revendication 1, **caractérisée en ce que** les moyens de liaison (20) de l'élément de couplage (17) se mettent en prise, dans l'état de montage final, dans des évidements (22) des sections d'appui (16).

3. Disposition d'éléments de ressort selon la revendication 2, **caractérisée en ce que** les évidements (22) sont formés par des saillies (21) disposées du côté de la section d'appui.

4. Disposition d'éléments de ressort selon la revendication 1, 2 ou 3, **caractérisée en ce que** les moyens de liaison (20) sont élastiques comme des ressorts.

5. Disposition d'éléments de ressort selon l'une des revendications 1 à 4, **caractérisée en ce que** les moyens de liaison (20) portent des languettes d'engagement à une extrémité.

6. Disposition d'éléments de ressort selon l'une des revendications 1 à 5, **caractérisée en ce que** l'élément de couplage (17) est conçu comme une barrette de liaison.

7. Disposition d'éléments de ressort selon l'une des revendications précédentes, **caractérisée en ce que** l'élément de ressort (13) se compose de matière plastique et est réalisé comme une pièce d'un seul tenant moulée par injection en forme de sablier.
